(19) Europäisches Patentamt
European Patent Office
Office européen des brevets

(11) Publication number: 0 045 716
A2

(12) EUROPEAN PATENT APPLICATION

(21) Application number: 81730069.2

(22) Date of filing: 28.07.81

(51) Int. Cl.³: F 23 L 7/00
C 01 B 3/10

(30) Priority: 01.08.80 JP 105071/80

(43) Date of publication of application:
10.02.82 Bulletin 82/6

(84) Designated Contracting States:
AT BE CH DE FR GB IT LI LU NL SE

(71) Applicant: Miura, Kazushi
No. 762, Osone-cho Kohoku-ku
Yokohama-shi Kanagawa-ken(JP)

(72) Inventor: Sumiyoshi, Yoshimitsu
163-55, Showa-cho
Hakodate-shi Hokkaido(JP)

(74) Representative: Lüke, Dierck-Wilm, Dipl.-Ing.
Gelfertstrasse 56
D-1000 Berlin 33(DE)

(54) **Combustion method and apparatus.**

(57) A combustion method and apparatus wherein combustion of a fuel is carried out in the presence of a water vapor of a high temperature to accelerate the combustion of the fuel.

FIG. 1

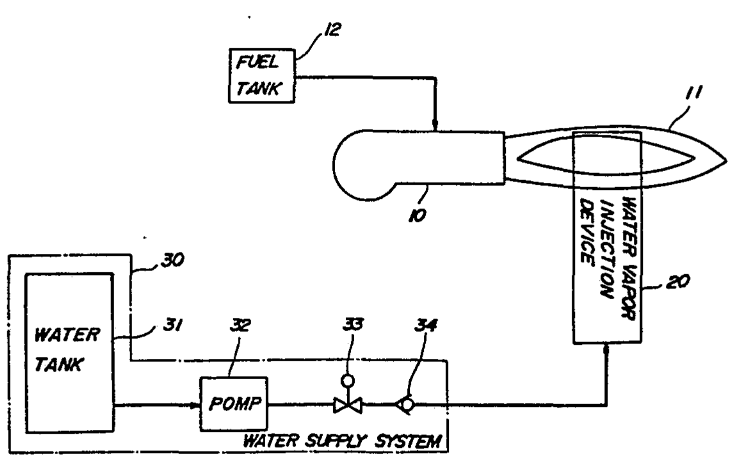


EP 0 045 716 A2

Croydon Printing Company Ltd.

# COMBUSTION METHOD AND APPARATUS

## BACKGROUND OF THE INVENTION

### Field of the Invention

This invention relates to a combustion method for combusting a fuel such as kerosene, heavy oil, propane gas or the like, wherein the combustion is carried out in the presence of water vapor of a high temperature, and further relates to a combustion apparatus for carrying out this method.

### Description of the Prior Art

Due to recent shortage of fossil fuel, in especial, oil resources, it is eagerly desired to save fuel consumption. On the other hand, with a view to preventing environmental pollution, complete combustion is desired to purify an exhaust gas by eliminating smoke, carbon monoxide, hydrocarbons, etc. from the exhaust gas.

To meet these demands, there have heretofore been proposed (1) combustion method wherein a fuel is mixed with water, (2) a combustion method wherein water is jetted into a flame of a burning fuel, and (3) a combustion method wherein hydrogen is preliminarily mixed with a fuel.

However, according to the method (1), it is required to prepare an emulsion by mixing the fuel with water before combustion, and, accordingly, this method requires provision of a special mixing apparatus and use of an emulsifier. By these reasons, this method cannot be a common one. And yet, the saving of the fuel enabled by this method is as low as 30%. In addition, this method cannot be applied to a fuel such as a gas fuel which cannot be emulsified.

The method (2) has a disadvantage in that the

temperature of the flame is lowered by the water jetted thereinto, making the combustion unstable. Therefore, substances such as carbon particles remaining unburned in the flame cannot be reacted with water sufficiently to obtain desired effects. Moreover, there is a possibility that the flame is extinguished by the jetting of water. Thus, this method is not practical.

The method (3) also involves problems such that the fuel must be mixed with explosive hydrogen before combustion, and, therefore, has a difficulty in handling. In addition, at present, hydrogen is more expensive than the fossil fuel. Thus, this method is also impractical.

## OBJECTS OF THE INVENTION

It is a first object of the present invention to provide a combustion method and apparatus which is capable of readily applied to either of liquid and gas fuels without special preliminary operations, effecting continuous, stable combustion without lowering the temperature of the flame and capable of attaining a complete combustion.

It is a second object of the present invention to provide a combustion method and apparatus which is capable of reducing the consumption of the fuel very much by attaining a complete combustion of the fuel.

It is a third object of the present invention to provide a combustion method and apparatus which is capable of eliminating smoke, carbon monoxide, etc. by a complete combustion of the fuel to purify the exhaust gas.

## SUMMARY OF THE INVENTION

In accordance with the present invention, there is provided a combustion method and apparatus for combusting a fuel such as kerosene, heavy oil, gas oil, propane gas

or natural gas, wherein water is heated to produce water vapor of a high temperature, said water vapor of a high temperature is injected into a flame accompanying the combustion of the fuel, and said water vapor is reacted with unburned substances remaining in the flame for accelerating the combustion thereof.

Further in accordance with the present invention, there is provided a combustion method and apparatus for combusting a fuel such as kerosene, heavy oil, gas oil, propane gas or natural gas, wherein water is pyrolytically decomposed to produce hydrogen, said hydrogen is burned within a flame accompanying the combustion of the fuel to generate water vapor of a high temperature, and said water vapor is reacted unburned substances remaining in the flame for accelerating the combustion thereof.

BRIEF DESCRIPTION OF THE DRAWINGS

Fig. 1 is a block diagram of one form of a combustion apparatus used for carrying out a combustion method of a first embodiment of the present invention;

Fig. 2 is a plan view of one form of a water vapor injection device used in the apparatus of Fig. 1;

Fig. 3 is a sectional view of the water vapor injection device of Fig. 2;

Fig. 4 is a block diagram of one form of a combustion apparatus used for carrying out a combustion method of a second embodiment of the present invention;

Fig. 5 is a top view of a water decomposing device used in the apparatus of Fig. 4;

Fig. 6 is a sectional view of the water decomposing device of Fig. 5;

Fig. 7 is a sectional view of another form of the water decomposing device;

Fig. 8 is a perspective view of a unit member of the water decomposing device of Fig. 7;

Fig. 9 is an explanatory view showing the application of the apparatus of the present invention to a household boiler; and

Fig. 10 is a diagram showing the effect of the present invention.

## DESCRIPTION OF THE EMBODIMENTS

A method according to a first embodiment of the present invention comprises a first step for burning a fuel such as kerosene, heavy oil, gas oil, propane gas, natural gas or the like; a second step for producing water vapor of a high temperature and injecting the same; and a third step for reacting the water vapor with substances remaining unburned. This method is carried out, for example, by a combustion apparatus as illustrated in Fig. 1. The combustion apparatus of Fig. 1 includes a burner 10 for burning a fuel such as kerosene, heavy oil, etc., a water vapor injection device 20 adapted to be heated by the burner 10 and a water supply system 30 for supplying water to the water vapor injection device 20.

In the first step, a carbon fuel such as kerosene, heavy oil, gas oil, propane gas, natural gas or the like is fed from a fuel tank 12 and caused to undergo combustion by the burner 10. The major portion of heat of the combustion is used as a heat source for a boiler (not shown) etc. and a small portion thereof is used as a heat source for producing water vapor in the second step as will be described in detail later.

Although the burner 10 is used as the heat source for the water vapor injection device 20 in the present embodiment, a separate heating means such as a special

burner for heating the device 20, an electrical heater, etc. may additionally be provided.

In the second step, water supplied from the outside is heated to produce water vapor of a high temperature and this water vapor is injected into a flame accompanying the combustion of the fuel. The heating is effected, for example, by disposing the water vapor injection device 20 in a position where the flame 11 of the burner 10 reaches the device 20 as illustrated in Fig. 1.

The water vapor injection device 20 has such a structure as illustrated in Figs. 2 and 3, wherein a vaporizing chamber 24 and a heating section 25 are provided in a body 21 of the water vapor injection device 20 and a water inlet nozzle 23 is fitted at a lower end of the vaporizing chamber 24. The water vapor injection device 20 is mounted, at a fixing portion 22 provided at a lower portion of the body 21, in a combustion chamber of a boiler etc. The water vapor injection device 20 is located so that at least a periphery 27a of the heating section 25 may be in contact with the flame 11 of the burner 10. It is preferred to locate the water vapor injection device 20 in such a manner that an upper end of the heating section 25 may be in contact with a flame portion of a lower temperature, to attain the heating more effectively. Although the water vapor injection device 20 is located substantially at a right angle to the flame 10 in the embodiment as illustrated, the position of the water vapor injection device 20 relative to the flame 11 is not limited thereto.

The body 21 is made of a heat-resistant material and is proof against the heating at a high temperature by the flame 11. Fins may be provided around the periphery

27a of the body 21, especially, of the heating section 25 to enhance the heat exchange efficiency of the body 21.

The water inlet nozzle 23 is made, for example, of iron and threadedly engaged with the lower end of the vaporizing chamber 24. This water inlet nozzle 23 has a throttling function to instantaneously vaporize, in the vaporizing chamber, water fed from the water supply system 30. The diameter of the nozzle 23 is determined by the water pressure, the volume of the vaporizing chamber 24 and the inner diameter and length of the heating section 25, and is determined, for example, to be smaller than half of the inner diameter of the heating section 25.

The vaporizing chamber 24 is formed at the lower portion of the body 21 and communicates, at the upper end thereof, with the heating section 25 and, at the lower end thereof, with the water supply system 30 through the water inlet nozzle 23. The heating section 25 is formed substantially cylindrical and has an inner diameter smaller than that of the vaporizing chamber 24 so as to allow water vapor to contact an inner wall 27b of the heating section 25 more effectively. The heating section 25 has, at the upper end thereof, an injection nozzle 26.

In the second step, the water vapor injection device 20 is heated by the burner 10 at a temperature around 750°C. Under this condition, water is taken into the vaporizing chamber 24 while being subjected to the throttling by the water inlet nozzle 23, when water is momentarily vaporized into water vapor. The obtained water vapor is further heated to a high temperature at the heating section 25 and injected into the flame 11 through the injection nozzle 26.

Water supply is carried out by the water supply system 30 comprised of a water tank 31, a pump 32, an

electromagnetic valve 33 and a check valve 34. The pump 32 pumps water in the water tank 31 into the water vapor injection device 20. The water supply pressure is, for example, 0.1 ∿ 10 $kg/cm^2$. For the water supply, a force of gravity may be utilized or tap water may directly be used. In these cases, the pump 32 may be omitted. The electromagnetic valve 33 controls the water supply to the water vapor injection device 20, and is adapted to be driven by a signal from a timer, bimetal, etc. so as to start water supply after the heating section 25 has been heated to a sufficiently high temperature. Alternatively, the electromagnetic valve 33 may be driven by a manual switch. The check valve 34 functions to prevent back flow of water by the vapor pressure in the vaporizing chamber 24 and prevent lowering of the vapor pressure.

The water supply is carried out by the water supply system 30 as described above in such a manner that, after the water vapor injection device 20 has been heated by the burner 10 to a predetermined temperature, the electromagnetic valve 33 is driven by the bimetal or the manual switch and the pump 32 is actuated so as to supply water in the water tank 31 to the water vapor injection device 20. As the water to be supplied to the device 20, there can be mentioned tap water, water from a well and hot water or steam from a boiler.

The third step is a step for reacting water vapor of a high temperature injected into the flame with substances remaining unburned in the flame to accelerate combustion of the unburned substances.

More specifically, the water vapor of a high temperature in the flame is further heated to a temperature as high as 1000 to 1200°C which substantially equals to the temperature of the flame. The so heated water vapor

is caused to react with the unburned substances, e.g., unburned carbon particles as follows:

$$C + H_2O \rightarrow H_2 + CO \quad ..... (1)$$

Thus, the unburned carbon particles are gasified so as to be readily burned. At the same time, the water vapor of a high temperature reacts with carbon monoxide existing in the flame to accelerate combustion of the carbon monoxide which is relatively slow to burn as follows:

$$CO + H_2O \rightarrow H_2 + CO_2 \quad ..... (2)$$

As soon as hydrogen is produced by the reactions (1) and (2), it is burned to produce water vapor of a high temperature and the resulting water vapor participates in the reactions as described above. The carbon monoxide produced by the reaction (1) is partly burned directly into carbon dioxide.

Thus, combustion of the carbon particles relatively difficult to burn and carbon monoxide slow to burn can be accelerated to attain a complete combustion of the carbon fuel containing carbon, hydrocarbon, etc., enhancing the combustion efficiency and eliminating smoke, carbon monoxide from the exhaust gas. In this case, since the injected water vapor is at a high temperature, the temperature of the flame is not lowered and the reactions as described above proceed smoothly, allowing the combustion to proceed stably. In addition, since the water vapor is injected from inside of the flame 11 into the flame, the flame is hardly extinguished by the injection of the water vapor. Moreover, since the water vapor of a high temperature in the flame functions as a carrier of heat, heat transfer coefficient can also be improved.

A combustion method according to a second embodiment of the present invention comprises a first step for burning a fuel containing carbon, hydrocarbon, etc.

such as kerosene, heavy oil, gas oil, propane gas, natural gas and the like; a second step for pyrolytically decomposing water to generate hydrogen and burning the generated hydrogen in a flame to produce water vapor of a high temperature; and a third step for reacting the water vapor with unburned substances in the flame. The first and the third step of this embodiment are identical with those of the first embodiment, so that the description thereof is omitted here.

Fig. 4 illustrates one form of a combustion apparatus for carrying out this combustion method. The apparatus illustrated in Fig. 4 comprises a burning means such as a burner 10 for burning a carbon fuel, a water decomposing device 40 adapted to be heated by the burner 10 and a water supply system 30 for supplying water to the water decomposing device 40. The burner 10 and the water supply system 30 are identical with those used in the first embodiment.

The water decomposing device 40 includes, for example, a decomposing portion 43 formed in a body 41 and a water inlet portion 44 and a hydrogen injecting portion 45 which are provided at the lower and the upper end of the decomposing portion 43, respectively, as illustrated in Figs. 5 and 6. The water decomposing device 40 is mounted, at a fixing portion 42 provided at a lower portion of the body 41, in a combustion chamber, for example, of a boiler. The water decomposing device 40 is located at a position where a flame 11 of the burner 10 reaches the outer periphery of the decomposing portion 43. The water decomposing device 40 may preferably be located at a position where the flame 11 surrounds the outer periphery of the decomposing portion 43 to attain the desired effect more effectively. Although the water decomposing device

40 is disposed substantially at a right angle to the flame 11 in this embodiment, the position of the device 40 is not limited thereto.

The body 41 is made of a heat-resistant material such as titanium, tantalum, stainless steel, ceramic, etc. and formed cylindrical to provide the decomposing portion 43 therein. By heating the outer periphery of the body 41 by the heating means (the burner 10 in this embodiment), water is caused to pyrolytically react, at the heating portion 43, with a material as will be described in detail leter. The body 41 may preferably have fins around the outer periphery thereof to enhance the heat absorption by the body 41.

The decomposing portion 43 communicate, at the lower end thereof, with the water inlet portion 44 through a support plate 46 having openings, and, at the upper end thereof, with the hydrogen injecting portion 45 through a filter 47. The decomposing portion 43 is packed with finely divided materials48.The material may be a metal which reacts with water to produce hydrogen or a low oxide thereof. Finely divided titanium is used in the present embodiment, but the material is not limited thereto. The material may be used in the form of a particle or powder. The filter 47 has small openings 47a for letting hydrogen pass therethrough. It prevents fly loss of the finely divided materials, but allows hydrogen produced in the decomposing chamber 43 to pass therethrough.

In the so constructed combustion apparatus, the second step is carried out in such a manner that water supplied from the water supply system 30 is pyrolytically decomposed to produce hydrogen and the resulting hydrogen is burned in the flame accompanying the burning in the first step, to produce water vapor of a high temperature. The

pyrolytic decomposition is effected by reacting the metal or the low oxide thereof with water under heating.

More specifically, a fuel is supplied from the fuel tank 12 and burned by the burner 10. The water decomposing device 40 is heated together with a boiler (not shown) by the flame 11. The water decomposing device 40 is heated to a temperature at which finely divided titanium reacts with water to produce hydrogen. If the heated temperature is too high, the reaction proceeds too rapidly. In case titanium is used, the heated temperature is preferred to be about 600°C.

After the water decomposing device 40 reaches the predetermined temperature, the electromagnetic valve 33 is driven and the pump 32 is actuated to pump water in the water storage tank 31 to the water decomposing device 40.

In the water decomposing device 40, the water supplied is throttled at the water inlet portion 44 and fed, through the openings 46a of the support plate 46, to the heated decomposing portion 43, where the water is momentarily vaporized to become water vapor, spread within the decomposing portion 43 and reacted with the finely divided titanium to produce hydrogen. This reaction is considered to include the following reactions:

$$Ti + H_2O \rightarrow TiO + H_2$$
$$Ti + 2H_2O \rightarrow TiO_2 + 2H_2$$
$$2Ti + 3H_2O \rightarrow Ti_2O_3 + 3H_2$$
$$Ti_2O_3 + H_2O \rightarrow 2TiO_2 + H_2$$

These reactions last until titanium is highly oxidized. Therefore, if the reaction is controlled to proceed at a slow pace, hydrogen can continuously be produced for a long time.

The produced hydrogen reaches the hydrogen

injecting portion 45 through five openings 47a of the filter 47 and injected outwardly therefrom. When the flame 11 of the burner 10 is located around the hydrogen injecting portion 45, the hydrogen is injected into the flame 11 and caused to undergo combustion. This combustion produces water vapor of a high temperature and the produced water vapor reacts with unburned substances and carbon monoxide in the flame 11 to accelerate the combustion thereof in the third step.

The metal oxide or high oxide thereof (for example $TiO_2$) produced together with hydrogen by the reaction as described above may be removed and replaced by fresh metal or low oxide of the metal, or reduced by introducing a reducing gas into the water decomposing device 40 for reusing the metal. In the latter case, carbon monoxide in the flame may be introduced into the water decomposing means 40 or carbon may be pyrolytically reacted with water in the water decomposing device 40 to produce carbon monoxide. Alternatively, if the fuel contains a reducing material, a portion of the fuel may be introduced into the water decomposing device 40.

Another mode of the second embodiment of the present invention will now be described.

Fig. 7 illustrates another form of the water decomposing device used in the combustion apparatus for carrying out the second embodiment of the present invention. This water decomposing device is so constructed that a plurality of small chambers are formed in series by partitions 52 in a body 51 of substantially cylindrical shape. These small chambers include an inlet portion 54, a vaporizing portion 55 and decomposing portions 56a, 56b and 56c. Each of the partitions 52 has one or more slits 53 so that the inlet portion 54 may communicate with the

decomposing portion 56c.

The body 51 is formed, for example, of unit members 510 as illustrated in Fig. 8. Each of the unit members 510 is formed substantially in a cylindrical shape having a recessed portion 511 and a projected portion 512. The recessed portion 511 and the projected portion 512 each have a thread 513 so as to threadedly engage with a projected portion and a recessed portion of another unit member, respectively. The unit members 510 of this structure are coupled to each other through the threaded engagement as described above to form the vaporizing portion 55 and the decomposing portions 56a to 56c. Another cylindrical member having a bottom for constituting the inlet portion 54 is further threadedly engaged with the assembly of the unit members 510 as described above to form the body 31. Of these members, the members constituting the decomposing portions 56a, 56b and 56c are made of a material which is capable of pyrolytically decomposing water to produce hydrogen, such as iron, stainless steel, titanium, etc. These members, especially the member or members which are subjected to heating at a high temperature are preferably made of a material having a heat-resistance, for example, titanium. The members constituting the inlet portions 54 and the vaporizing portion 55 may be made of any suitable materials and of course they may be made of the same material as those of the decomposing portions 56a to 56c. The structure and material of the body 51 is not limited to such a structure and materials as described above, and the body 51 may be formed of an integral, cylindrical member having partitions provided therein.

In operation, the so constructed water decomposing means 50 is mounted, for example, in a boiler (not shown) in the same manner as of the water decomposing device 40

illustrated in Fig. 4, and the burner 10 and the water supply system 30 as illustrated in Fig. 4 are used to carry out the combustion method according to the second embodiment of the present invention. The first and the second step are substantially the same as those of the first embodiment of the present invention, and so they are not referred to here.

In the second step of the present embodiment, water is supplied from the water supply system 30 to the water decomposing device 50 heated by the burner 10 to a predetermined temperature, through the inlet portion 54. The supplied water is vaporized at the vaporizing portion 55 and the resulting water vapor is injected into the decomposing portion 56a through the slits 53. The water vapor is further heated at the decomposing portion 56a and a portion of the water vapor reacts with the inner wall of the decomposing portion 56a to produce hydrogen. Although the process of this reaction is not apparent now, it is inferred that the reactions as described above in connection with the second embodiment might occur in case the inner wall of the decomposing portion is made of titanium.

The water vapor containing the produced hydrogen is injected to the second decomposing portion 56b through the slits 53. In the second decomposing portion 56b, a portion of the water vapor produces hydrogen in the same manner as described above. The water vapor with hydrogen then reaches the decomposing portion 56c and injected, while being further subjected to heating, from the nozzle 57 into the flame 11 of the burner 10.

Hydrogen is instantaneously burned in the flame 11 to produce water vapor of a high temperature, which is then reacted with unburned substances in the flame 11 to

accelerate combustion thereof. In this case, not only hydrogen but water vapor of a high temperature is injected from the water decomposing device 50 and this water vapor of a high temperature also serves to accelerate the combustion of the unburned substances.

Although there is a possibility that an oxide layer may be formed on the inner wall of the decomposing portion 56 by the reaction as described above and the oxide layer may inhibit further proceeding of the reaction, in fact, the reaction lasts considerably long time in the combustion apparatus of the present invention. It is not known now why the reaction lasts such a long time, but the reason may be inferred as follows:

With the structure of the water decomposing device wherein a plurality of small chambers with respective portions are arranged in series and they are communicated with each other through the slits formed on each of the partitions, water pumped from the water supply system 30 is vaporized at the vaporizing portion 55 to become a gas of a high pressure and injected into the decomposing portion 56a of the lower pressure through the slits 53. This causes turbulent flow or shock wave and the inner wall of the decomposing portion 56 is peeled to always expose its fresh surface.

Although the decomposing portion 56 is of a three-stage structure in the present embodiment, the number of the stages may be varied according to necessity.

As a still another form of the water decomposing device employable in the present invention, there may be mentioned a water decomposing device having the same structure as that of Fig. 3. In this case, a body is made of a heat-resistant, reducing material, and a vaporizing portion and a decomposing portion are formed in the body.

The combustion apparatus of the present invention can be attached, for use, to an existing combustion system and can be operated easily, so that the present invention can readily be applied not only to an industrial, large-scale boiler but a household, small-scale boiler etc.

Fig. 9 is an explanatory view showing the application of the combustion apparatus according to the present invention to a household boiler. The combustion apparatus of Fig. 9 is so arranged that the water decomposing device 40 with fins 41a provided around the body 41 is disposed at a central portion in a combustion chamber 61 of a boiler 60 so as to be in contact with a flame of the burner 10. Water is supplied from the water storage tank 31 through the pump 32, the electromagnetic valve 33 and the check valve 34.

The effect of the combustion method as applied to the boiler of Fig. 9 is shown in Fig. 10. Fig. 10 is a graph showing consumptions of kerosene by months from September to the next March by a boiler equipped with the combustion apparatus of the present invention and an identical boiler but without the combustion apparatus of the present invention. The solid line A designates the kerosene consumption by the boiler with the combustion apparatus of the present invention and the broken line B designates the kerosene consumption by the boiler without the combustion apparatus of the present invention. As apparent from this comparison, according to the present invention, the fuel consumption was reduced to 1/3 of that of the conventional combustion system.

When the deposition of soot in exhaust tubes of these boilers was checked, no soot deposition was found, for a considerably long time, in the exhaust tube of the boiler equipped with the combustion apparatus of the present

invention, whereas soot deposition was found in the exhaust tube of the other boiler, shortly after the initiation of driving of the boiler. Thus, it can be understood that the combustion apparatus of the present invention enables complete combustion of a fuel and purification of the exhaust gas.

Although one water decomposing device is used for one burner in the foregoing embodiments, a plurality of water decomposing device may be used for a plurality of burners, respectively, or one water decomposing device may be used for a plurality of burners.

In the foregoing embodiments, the description is made in connection with the case where a liquid or gas fuel is employed, but this invention may be applicable to a solid fuel such as coal etc.

As described above, according to the present invention, combustion of a fuel is carried out in the presence of a water vapor of a high temperature to accelerate the combustion of the fuel, so that the combustion method of the present invention can be readily applied to either of a liquid or gas fuel without special preliminary operations. This method also enables continuous, stable combustion without lowering the temperature of a flame, remarkable reduction of fuel consumption, and purification of the exhaust gas by a complete combustion of the fuel.

CLAIMS:

1. A combustion method for combusting a fuel such as kerosene, heavy oil, gas oil, propane gas, or natural gas, which is characterized by heating water to generate water vapor of a high temperature, injecting said water vapor of a high temperature into a flame accompanying the combustion of the fuel, and causing said water vapor to react with unburned substances remaining in the flame for accelerating the combustion thereof.

2. A combustion method as claimed in claim 1, wherein water is heated by a portion of heat generated by the combustion of the fuel.

3. A combustion apparatus having a burner for burning a fuel such as kerosene, heavy oil, gas oil, propane gas, or natural gas, which apparatus comprises a water vapor injection device adapted to be heated by said burner for generating water vapor of a high temperature and inject said water vapor into a flame issued from said burner; and a water supply system for supplying water to said water vapor injection device; said water vapor injection device having therein a vaporizing chamber for vaporizing water and a heating section for heating the resulting water vapor to a high temperature, said heating section being so disposed that at least the periphery of said heating section may be in contact with the flame from the burner.

4. A combustion method for combusting a fuel such as kerosene, heavy oil, gas oil, propane gas, or natural gas, which is characterized in that water is pyrolytically decomposed to produce hydrogen; said hydrogen is burned within a flame accompanying the combustion of the fuel to generate water vapor of a high temperature; and said water vapor is reacted with unburned substances remaining in the flame for accelerating the combustion

thereof.

5. A combustion method as claimed in claim 4, wherein water is brought into contact with a reducing metal, while being subjected to heating, to cause pyrolytic decomposition for producing hydrogen.

6. A combustion method as claimed in claim 4 or 5, wherein water is pyrolytically decomposed by a portion of heat generated by the combustion of the fuel.

7. A combustion apparatus having a burning means for burning a fuel such as kerosene, heavy oil, gas oil, propane gas, or natural gas, which apparatus comprises water decomposing device for pyrolytically decomposing water to produce hydrogen and injecting the resulting hydrogen into a flame issued from said burning means; a heating means for heating said water decomposing device; and a water supply system for supplying water to said water decomposing device.

8. A combustion apparatus as claimed in claim 7, wherein said water decomposing device has a body made of a heat-resistant material; said body including a water inlet portion, a hydrogen injecting portion and a decomposing portion; said decomposing portion being packed with finely divided materials which are capable of producing hydrogen when reacted with water so that hydrogen is produced when said materials are reacted, under heating, with water supplied by said water supply system.

9. A combustion apparatus as claimed in claim 7, wherein said burning means is a burner and said water decomposing device is disposed at a position where it can be in contact with the flame issued from said burner; said water decomposing device having a body which is made of a heat-resistant material functioning as a reducing agent; said body including a vaporizing portion and a decomposing

portion.

10. A combustion apparatus as claimed in claim 7, wherein said water decomposing device has a plurality of chambers arranged in series in a body thereof and partitioned by walls provided therebetween to define a water inlet portion, a vaporizing portion and a decomposing portion, each of said walls having one or more slits so as to communicate said water inlet portion with said decomposing portion; at least said decomposing portion being made of a material which is capable of producing hydrogen through pyrolytic decomposition of water.

FIG. 1

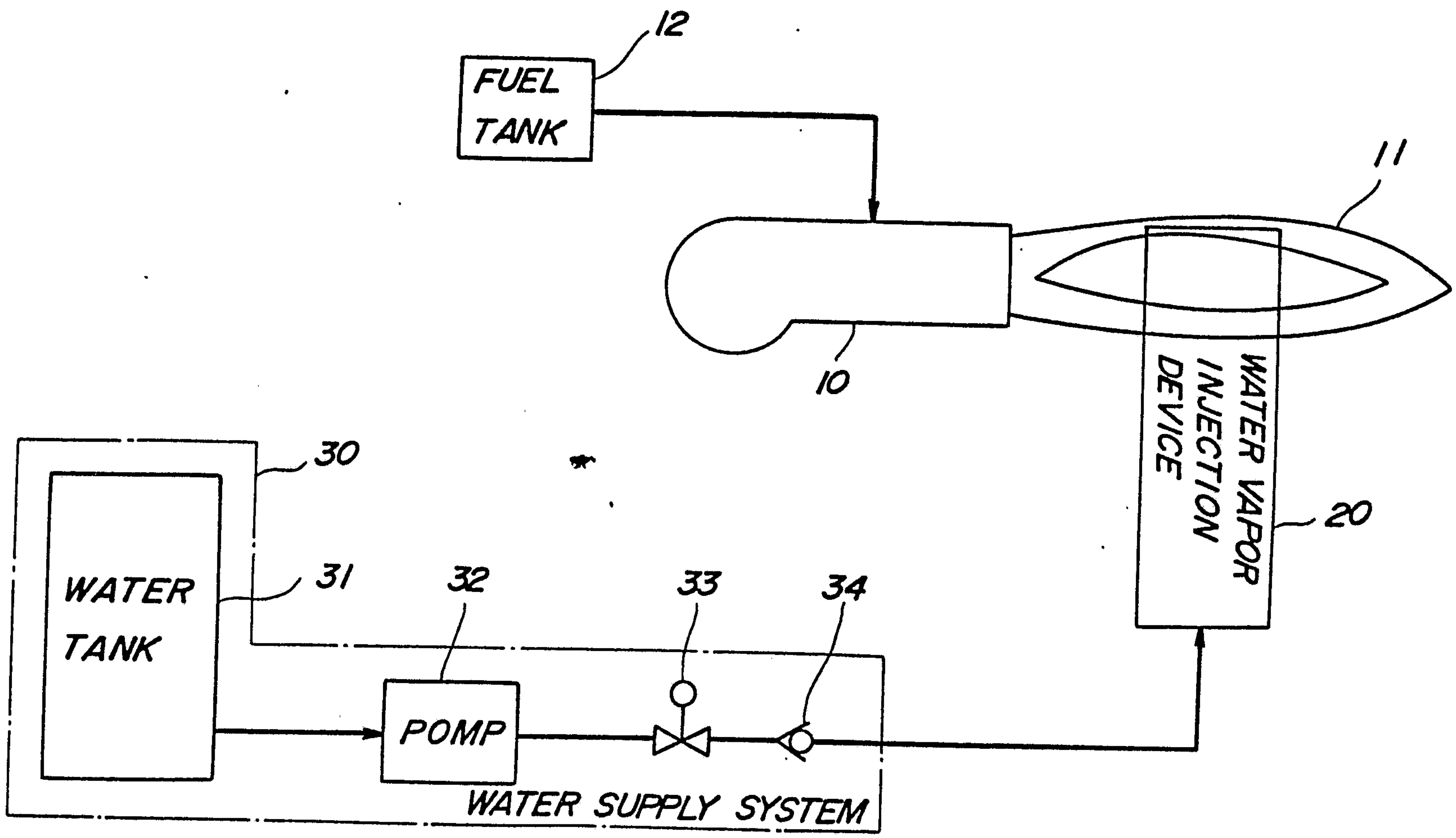
FUEL TANK
12
11
10
WATER VAPOR INJECTION DEVICE
20
30
WATER TANK
31
32
POMP
33
34
WATER SUPPLY SYSTEM

FIG. 2

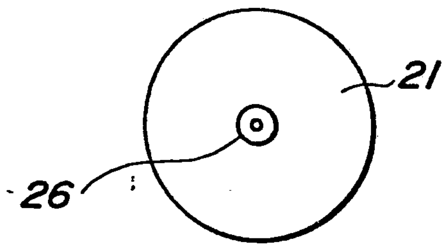


FIG. 5

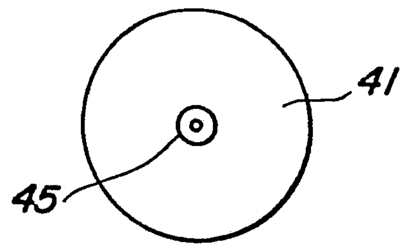


FIG. 3

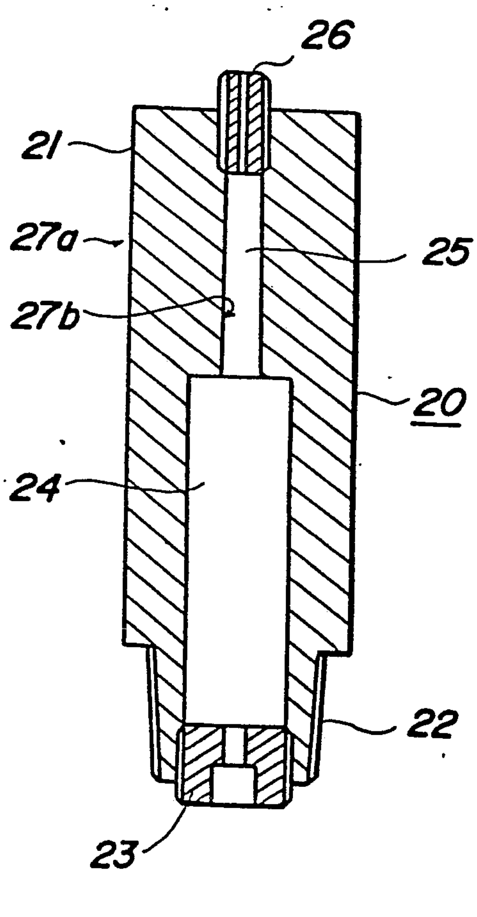


FIG. 6

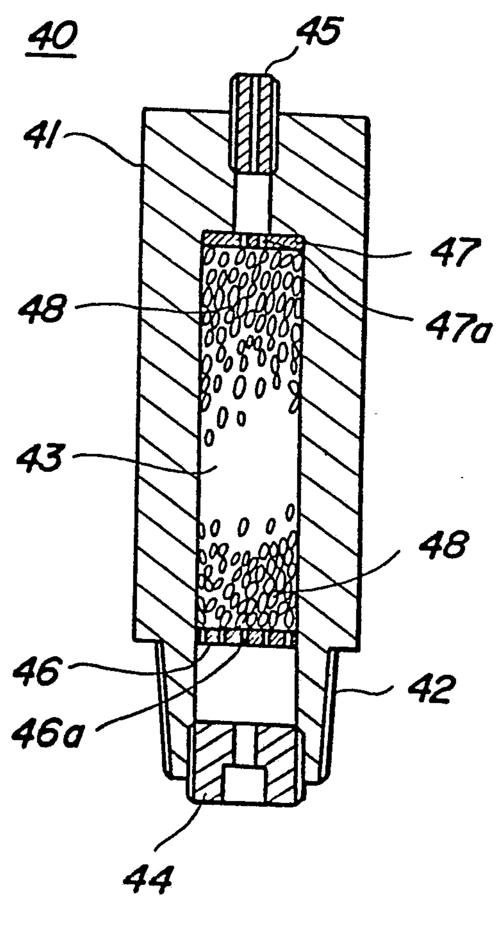

FIG. 4

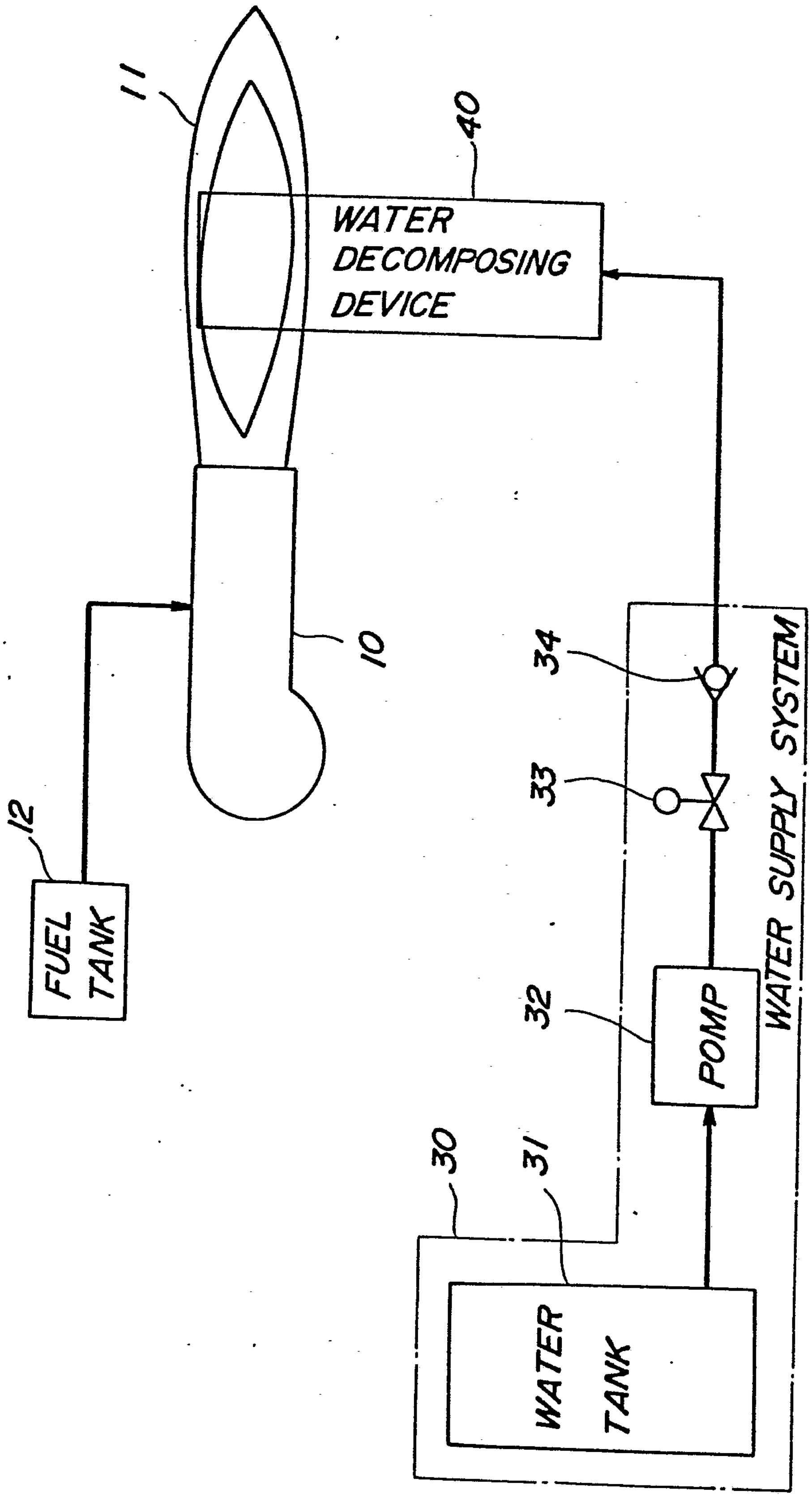
11
40
WATER
DECOMPOSING
DEVICE
10
12
FUEL
TANK
34
33
32
POMP
WATER SUPPLY SYSTEM
30
31
WATER
TANK

0045716

4/5

FIG. 7

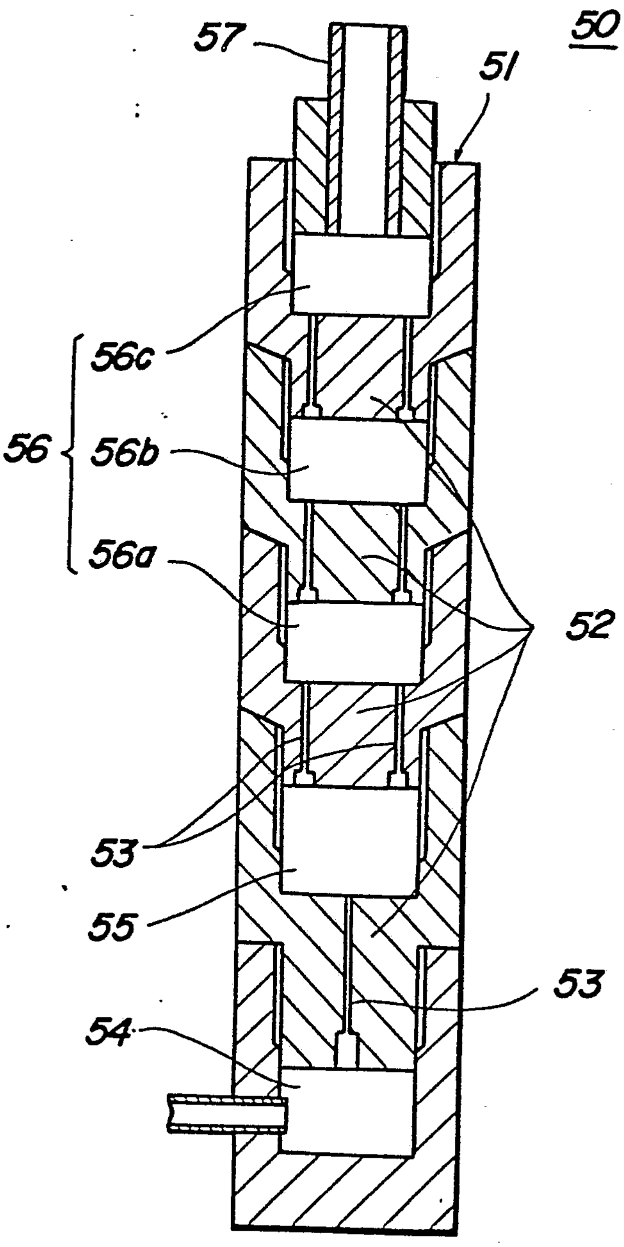


FIG. 8

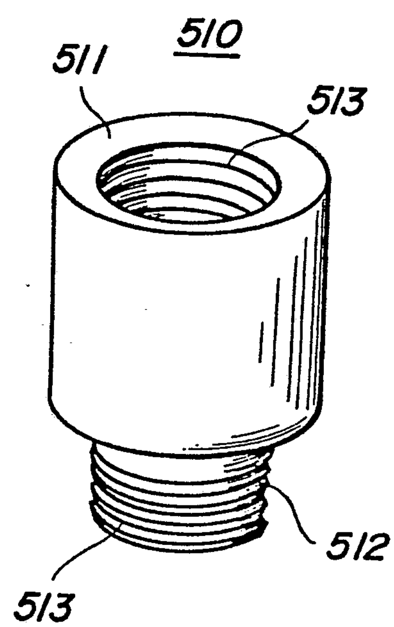

FIG. 9

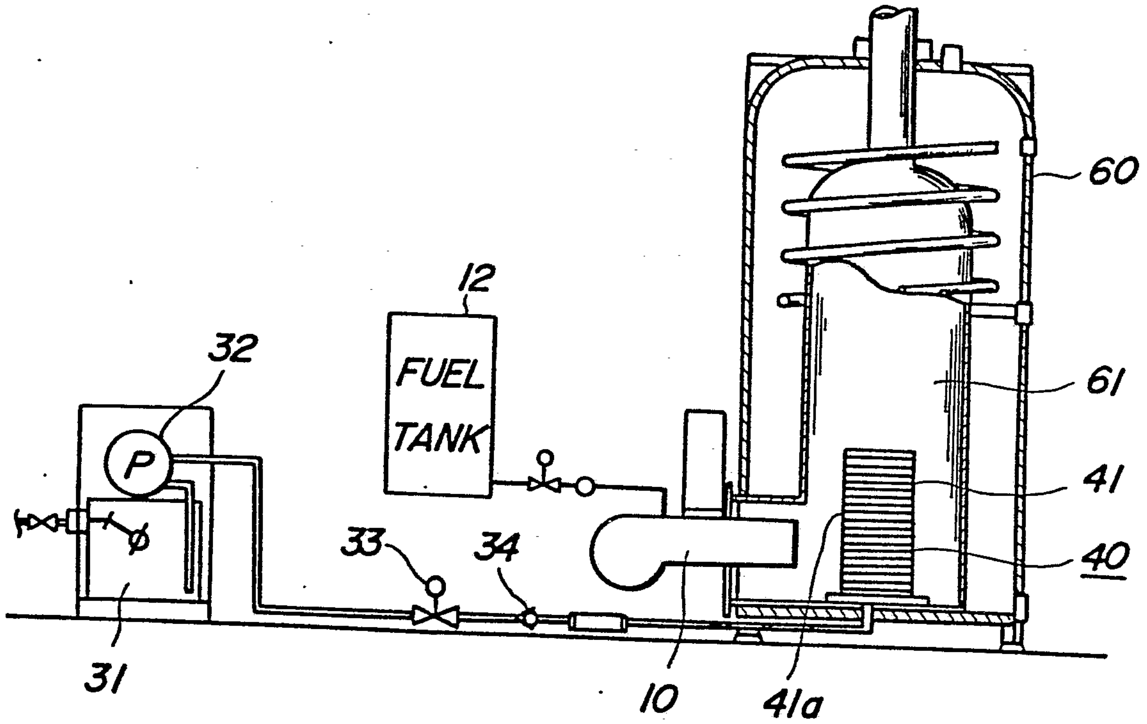

60
12
FUEL TANK
32
P
61
41
33
34
40
31
10
41a


FIG. 10

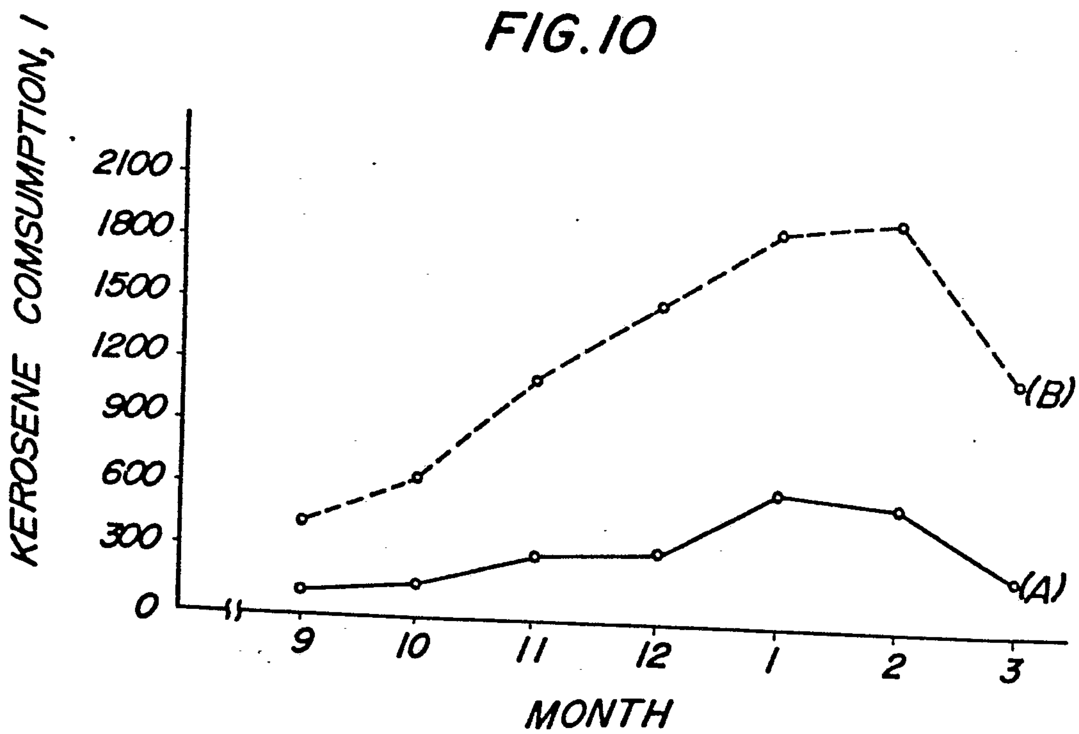

KEROSENE COMSUMPTION, l
2100
1800
1500
1200
900
600
300
0
(B)
(A)
9
10
11
12
1
2
3
MONTH